(19) Europäisches Patentamt
European Patent Office
Office européen des brevets

(11) EP 1 930 381 B1

(12) **EUROPEAN PATENT SPECIFICATION**

(45) Date of publication and mention of the grant of the patent:
**18.02.2009 Bulletin 2009/08**

(51) Int Cl.:
***C09D 4/00*** *(2006.01)* ***C03C 25/00*** *(2006.01)*
***C08F 290/00*** *(2006.01)*

(21) Application number: **06025086.7**

(22) Date of filing: **05.12.2006**

(54) **Radiation-curable coating composition**

Strahlungshärtbare Beschichtungszusammensetzung

Composition de revêtement durcissable par rayonnement

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.06.2008 Bulletin 2008/24**

(73) Proprietor: **DSM IP Assets B.V.**
**6411 TE Heerlen (NL)**

(72) Inventors:
- **Bulters, Markus Johannes Henricus**
**6137 KV Sittard (NL)**
- **Steeman, Paulus Antonius Maria**
**6176 JC Spaubeek (NL)**
- **Dias, Aylvin Jorge Angelo Athanasi**
**6213 HE Maastricht (NL)**
- **Keestra, Beert Jacobus**
**5582 HG Waalre (NL)**

(74) Representative: **Hatzmann, Martin et al**
**Vereenigde**
**Johan de Wittlaan 7**
**2517 JR Den Haag (NL)**

(56) References cited:
**EP-A- 1 209 132**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a radiation-curable primary coating composition, to a coating system comprising a radiation-curable primary and a radiation-curable secondary coating composition, to a coated optical fiber comprising a primary and a secondary coating, to an optical fiber ribbon comprising an optical glass fiber, at least one of said coated optical fibers, and to the use of a radiation-curable primary coating composition for coating an optical fiber.

Because optical fibers are fragile and easily broken, the optical fibers are usually coated using one or more radiation-curable coating compositions. Generally at least two coatings are applied, a primary coating of a relatively soft, flexible material directly on the glass surface, and a harder coating, a secondary coating, on the primary coating. The transmission characteristics of optical fibers are known to be significantly affected by properties such as equilibrium modulus or the like of the primary coating material which is in direct contact with the optical fibers. When optical fibers are coated with a primary coating material having a relatively high equilibrium modulus, for example about 1.5 MPa or higher, the attenuation loss of the optical fibers may increase because of decreased buffering effect. In fact there is a long felt need in the optical fiber industry to use softer (lower equilibrium modulus) primary coatings to introduce a higher resistance against microbending and thus to prevent attenuation losses. Primary coating materials having an equilibrium modulus of 1.5 MPa or less are thus of interest as is described for example by Bouten et al. in J. of Lightwave Technology, Vol. 7, April 1989, p. 680-686.

However, when using such low equilibrium modulus primary coatings, and in particular, when using primary coatings having a equilibrium modulus below 1.3 MPa, the integrity of the coating is at risk. Hence, such coatings tend to be very fragile and are prone to formation of defects in the coating during processing or use of the coated optical fiber.

Primary coatings having a low secant modulus (<1.5 MPa) while having a high tensile strength at break (>1.5 MPa) are described in WO99/08975. Said coatings are said to protect an optical fiber for a long period of time in a safe and stable manner while obtaining an excellent transmission performance. However, defects may still appear during the use of the coated optical fiber, in particular, under the influence of high stresses and temperature extremes which the coated fiber has to withstand over time (during production, cabling or when buried under the ground). This problem is further enhanced nowadays due to the increasing line speeds for fiber drawing causing steeper cooling profiles, and allowing less time for relaxation of thermally induced stresses.

In WO02/42237 an optical glass fiber is described, which is coated with a primary coating having an equilibrium modulus of about 1.5 MPa or lower and subsequently a secondary coating, which has a much higher Tg than the primary coating. Said primary coating is subjected to at least the following stress: when the temperature decreases during the production process the secondary coating passes its glass temperature (Tg) and enters the glassy state while the primary coating is still above its glass temperature. The primary coating still intends to shrink when the temperature decreases further, but is captured between the rigid secondary on the one hand and the rigid glass fiber on the other hand. This precludes the shrinking process of the primary coating substantially resulting in triaxial stress. This stress can result in loosening of the primary coating from the glass surface if the adhesion is insufficient, as is described by King and Aloisio in J. Electronic Packaging, June 1997, Vol. 119 p.133-137 in an article titled "Thermomechnical Mechanism for Delamination of Polymer Coatings from Optical Fibers". During coloring, cabling and possibly in the field, the fibers may be cycled through high and low temperatures, causing comparable stress on the primary coating.

This stress has been proven to also be the cause of the appearance of defects within the coating. These defects are in fact ruptures in the bulk of the primary coating itself which have to be regarded as distinct from delaminations at the interface of primary coating and glass. For the purposes of the present invention, such defects in the coating are further called cavities.

It is an object of the present invention to obtain an optical fiber coated with a primary and secondary coating, and optionally an ink composition of which the primary coating has a sufficiently high cavitation strength while having a low equilibrium modulus.

It is another object of the present invention to obtain radiation-curable primary coating compositions which, when cured, result in soft primary coatings with an equilibrium modulus of 1.5 MPa or less having sufficient resistance to cavitation to remain substantially free of cavities.

It has surprisingly been found that the above objects can be accomplished by using a radiation-curable primary coating composition comprising 0.6-10 volume% (vol%) of particles. In the above definition the vol% of particles refers to the total amount of particles, i.e. individual, fully dispersed, primary particles (hereinafter referred to as primary particles) and those part of agglomerates.

In one embodiment of the invention said particles have a flakiness ratio m = B/T of 10 or less, wherein the thickness T is the minimum distance between two parallel planes which are tangential to opposite surfaces of the particle, one plane being the plane of maximum stability, and the breath B is the minimum distance between two parallel planes which are perpendicular to the planes defining the thickness T and are tangential to opposite sides of the particles, and having a length L of between 0.003 and 3 $\mu$m, wherein L is the distance between two parallel planes which are perpendicular to the planes defining thickness T and breath B and are tangential to opposite sides of the particles. Herein the

radiation-curable primary coating composition, when cured, has an equilibrium modulus of 1.5 MPa or less, and a cavitation strength at which a tenth cavity appears ($\sigma^{10}_{cav}$) of at least 1.1 MPa. Herein the flakiness ratio B/T and the length L are determined for primary particles, and defined as in Heywood, H., J. Pharm. Pharmacol. Suppl., 15, (1963), 56T, and in "Particle Size Measurement", T. Allen, Chapman and Hall Ltd, London (1975). The flakiness ratio is determined by Transmission Electron Microscopy (TEM). For determining the flakiness ratio for particles in a primary coating of an optical fiber samples (coupes) are cut from the primary coating, both parallel to the optical glass fiber and perpendicular. Depending on the number of particles present in the coating, more coupes may be necessary to determine the flakiness ratio. Typically between 10 and 100 particles are analysed.

The integrity of a soft primary coating in a coated optical fiber during use is critically dependent on its resistance to cavitation. It has now been found that a high resistance to cavitation can be obtained even for a low equilibrium modulus primary coating if the primary coating contains 0.6-10 vol% of particles

The present invention further relates to a coating system for an optical glass fiber comprising a radiation-curable primary coating composition according to the invention and a secondary coating composition.

The present invention also relates to a coated optical fiber comprising an optical glass fiber, a primary coating obtained by curing the radiation-curable primary coating composition according to the invention and a radiation-curable secondary coating applied on the primary coating and optionally an ink composition applied on the secondary coating.

Said primary coating generally adheres sufficiently to the optical fiber to reduce to a minimum the occurrence of delaminations (or debonding) at the primary coating-glass interface. The secondary coating generally sufficiently adheres to the primary coating to reduce to a minimum the occurrence of delaminations at the primary coating-secondary coating interface. The primary coating has a cavitation strength that is sufficient to reduce to a minimum the occurrence of cavities within the coating itself.

The invention further relates to an optical fiber ribbon comprising a plurality of coated, and optionally colored optical fibers arranged in a plane and embedded in a matrix composition, wherein at least one coated optical fiber is a coated optical fiber according to the invention.

A suitable definition of the phenomenon of cavitation strength according to the present invention is the stress at which the tenth cavity becomes visible when measured in a tensile testing machine at a pulling speed of 20 μm/min for a 100 μm thin (constrained) layer (or 20% per min) when observed at a magnification of about 20x, as described in the Experimental Section.

The primary coating composition according to the invention comprises 0.6-10 vol%, preferably 1-5 volume%, more preferably 2-4 volume% of particles. In one embodiment of the invention said particles have a flakiness ratio m = B/T of 10 or less, preferably 8 or less, more preferably 5 or less, in particular 2 or less, more in particular 1.5 or less, wherein the thickness T is the minimum distance between two parallel planes which are tangential to opposite surfaces of the particle, one plane being the plane of maximum stability, and the breath B is the minimum distance between two parallel planes which are perpendicular to the planes defining the thickness T and are tangential to opposite sides of the particles, and having a length L of between 0.003 and 3 μm, wherein L is the distance between two parallel planes which are perpendicular to the planes defining thickness T and breath 8 and are tangential to opposite sides of the particles. Particularly suitable are particles with a flakiness ratio close to 1, i.e. (nearly) spherical particles.

The flakiness ratio m is one of Heywood's ratios:

$$\text{Elongation ratio: } n = L/B$$

$$\text{Flakiness ratio: } m = B/T$$

as defined in Heywood, H., J. Pharm. Pharmacol. Suppl., 15, (1963), 56T, and in "Particle Size Measurement", T. Allen, Chapman and Hall Ltd, London (1975).

Generally the dimensions of 100 particles, ad random selected, are determined and the average value is taken. In case of particles having an elongation ratio above 1, wherein elongation ratio is defined as the L/B, wherein L and B are the length and breath as defined above, respectively, like worm-shaped particles, L is determined from one end to the other end, by following the primary axis as projected in the plane of the photo. For the diameter the longest straight line that can be drawn from one side of the particle to the other side, perpendicular to the primary axis is taken.

The radiation-curable primary coating composition according to the invention comprises particles that may be either organic or inorganic particles.

In one embodiment of the invention the particles are inorganic particles. Suitable inorganic particles are for example oxide particles, for example particles of an oxide selected from the group of aluminum oxide, silicium oxide,

zirconium oxide, titanium oxide, antimony oxide, zinc oxide, tin oxide, indium oxide, and cerium oxide. It is also possible to use a mixture of particles from different oxides or to use particles of mixed oxides. Preferably, the particles are particles of aluminum oxide, zirconium oxide or silicium oxide. Particularly suitable are silicium oxide particles, e.g. colloidal silica particles.

As specific examples of oxide particles at least one type of particles selected from the group consisting of tin-doped indium oxide (ITO), antimony-doped tin oxide (ATO), fluorine-doped tin oxide (FTO), phosphorus-doped tin oxide (PTO), zinc antimonate (AZO), indium-doped zinc oxide (IZO), and zinc oxide can be given. These particles may be used either individually or in combination of two or more.

As examples of commercially available products of these oxide particles, T-1 (ITO) (manufactured by Mitsubishi Materials Corporation), Passtran (ITO, ATO) (manufactured by Mitsui Mining & Smelting Co., Ltd.), SN-100P (ATO) (manufactured by Ishihara Sangyo Kaisha, Ltd.), NanoTek ITO (manufactured by C.I. Kasei Co., Ltd.), ATO, FTO (manufactured by Nissan Chemical Industries, Ltd.), and the like can be given.

In one embodiment of the invention the inorganic particles have reactive organic groups on their surface. Such reactive particles may or may not comprise additional, non-reactive organic groups. Additional non-polymerisable groups may be used to tune the overall polarity and thus the hydrophobicity or hydrophilicity of the particle and the resultant coating. In one embodiment of the process according to the invention, the majority of particles present in the radiation-curable coating composition are reactive nanoparticles. The reactive groups of the particles, and if present, the polymerisable groups of a reactive diluent may polymerise in a homopolymerisation reaction or a copolymerisation reaction. In such a case the reactive groups are polymerisable groups. A copolymerisation reaction is possible when in the mixture different groups are present that can polymerise, for example if the groups of the particles and of the reactive diluent are different, or if mixtures of reactive diluent and reactive/or particles are used that comprise such different groups. It is also possible that the reactive groups of the nanoparticles react with a polymer network that is formed by the polymerisation of one or more reactive diluents.

The preparation of reactive particles as such is known in the art, and has been described in e.g. US-6,025,455.

As examples of agents which can be used to introduce reactive organic groups on the surface of the particles, further called surface treatment agents, alkoxysilane compounds, tetrabutoxytitanium, tetrabutoxyzirconium, tetraisopropoxyaluminum, and the like can be given. These compounds may be used either individually or in combination of two or more.

As specific examples of alkoxysilane compounds, compounds having an unsaturated double bond in the molecule such as γ-methacryloxypropyltrimethoxysilane, γ-acryloxypropyltrimethoxysilane, and vinyltrimethoxysilane; compounds having an epoxy group in the molecule such as γ-glycidoxypropyltriethoxysilane and γ-glycidoxypropyltrimethoxysilane; compounds having an amino group in the molecule such as γ-aminopropyltriethoxysilane and γ-aminopropyltrimethoxysilane; compounds having a mercapto group in the molecule such as γ-mercaptopropyltrimethoxysilane and γ-mercaptopropyltriethoxysilane; alkylsilanes such as methyltrimethoxysilane, methyltriethoxysilane, and phenyltrimethoxysilane; and the like can be given. Of these, γ-mercaptopropyltrimethoxysilane, γ-glycidoxypropyltrimethoxysilane, methyltrimethoxysilane, methyltriethoxysilane, and phenyltrimethoxysilane are preferable from the viewpoint of dispersion stability of the surface-treated oxide particles.

As the surface treatment agent, a compound including a functional group which copolymerizes or cross-links with an organic resin (reactive surface treatment agent) is also preferable. As such a surface treatment agent, the above compound including an unsaturated double bond in the molecule, or a compound including at least two polymerisable unsaturated groups, a group shown by the following formula (1),

$$-X=C(=Y)-NH- \qquad (1)$$

wherein X represents NH, O (oxygen atom), or S (sulfur atom), and Y represents Odor S, and a silanol group or a group which forms a silanol group by hydrolysis is preferable.

The group shown by the formula (1) is preferably at least one group selected from the group consisting of a urethane bond [-O-C(=O)-NH-], -O-C(=S)-NH-, and a thiourethane bond [-S-C(=O)-NH-].

As examples of such a surface treatment agent, an alkoxysilane compound which includes a urethane bond [-O-C(=O)NH-] and/or a thiourethane bond [-S-C(=O)NH-] and at least two polymerizable unsaturated groups in the molecule can be given. As a specific example of such a compound, a compound shown by the following formula (2) can be given.

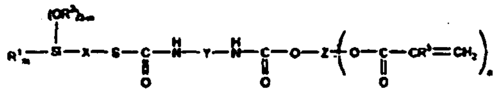

(2)

wherein $R^1$ represents a methyl group, $R^2$ represents an alkyl group having 1-6 carbon atoms, $R^3$ represents a hydrogen atom or a methyl group, m represents either 1 or 2, n represents an integer of 1-5, X represents a divalent alkylene group having 1-6 carbon atoms, Y represents a linear, cyclic, or branched divalent hydrocarbon group having 3-14 carbon atoms, Z represents a linear, cyclic, or branched divalent hydrocarbon group having 2-14 carbon atoms. Z may include an ether bond.

The compound shown by the formula (2) may be prepared by reacting a mercaptoalkoxysilane, a diisocyanate, and a hydroxyl group-containing polyfunctional (meth)acrylate.

As a preferable preparation method, a method of reacting a mercaptoalkoxysilane with a diisocyanate to obtain an intermediate containing a thiourethane bond, and reacting the residual isocyanate with a hydroxyl group-containing polyfunctional (meth)acrylate to obtain a product containing a urethane bond can be given.

The same product may be obtained by reacting a diisocyanate with a hydroxyl group-containing polyfunctional (meth)acrylate to obtain an intermediate containing a urethane bond, and reacting the residual isocyanate with a mercaptoalkoxysilane. However, since this method causes the addition reaction of the mercaptoalkoxysilane and the (meth) acrylic group to occur, purity of the product is decreased. Moreover, a gel may be formed.

As an example of the mercaptoalkoxysilane used to produce the compound shown by the formula (2), γ-mercaptopropyltrimethoxysilane, γ-mercaptopropyltriethoxysilane, γ-mercaptopropyltributoxysilane, γ-mercaptopropyldimethylmethoxysilane, γ-mercaptopropylmethyldimethoxysilane, and the like can be given. Of these, γ-mercaptopropyltrimethoxysilane and γ-mercaptopropylmethyldimethoxysilane are preferable.

As examples of commercially available products of the mercaptoalkoxysilane, SH6062 (manufactured by Toray-Dow Corning Silicone Co., Ltd.) can be given.

In another embodiment of the invention silica nanoparticles, for example Nanocryl, manufactured by Hanse Chemie AG, are used as the particles. Nanocryl products contain up to 60 % of colloidal silica homogeneously dispersed in a broad range of standard unsaturated (meth)acrylic monomers and oligomers (polyester-, epoxy-, urethane-, and melamine-acrylates). The silica-phase consists of surface-modified, synthetic $SiO_2$ nanospheres with diameters of about 20 nm and extremely narrow particle size distributions. Examples of suitable Nanocryl products are those of the XP 21 series. In one embodiment of the invention monoacrylates are used, for example XP 21/0765 or XP 21/1306. These products can be found at www.hanse-chemie.com.

In another embodiment of the invention the particles are organic particles.

As examples of the organic polymer particles, a polyolefin, an acrylic resin, a polyurethane, a polyamide, a polystyrene, a polyester, a silicone resin, a styrene/divinylbenzene copolymer, and the like can be given. As the polymer particles, either crosslinked polymer particles or uncrosslinked polymer particles may be used. Moreover, since many crosslinkable monomers can be easily copolymerized at an arbitrary ratio, the polymer particles can be highly crosslinked. As commercially available products of the organic polymer particles, Mipelon XM-220 (manufactured by Mitsui Petrochemical Co., Ltd.), polymethyl methacrylate spherical fine particle MB, MBX, polystyrene particle SBX (manufactured by Sekisui Plastics Co., Ltd.), silicone high performance powder Torayfill (manufactured by Toray-Dow Corning Silicone Co., Ltd.), spherical functional fine particle polymer Art Pearl (manufactured by Negami Chemical industrial Co., Ltd.), and the like can be given. Furthermore composite particles, for example core shell rubbers, for example acrylic core shell rubbers may be used. Suitable examples of core shell rubbers include Paraloid (Rohm & Haas) and Durastrength (Arkema).

The number average particle size of the particles measured by a dynamic light scattering method or electron microscopy is preferably between 0.003 and 3 μm, more preferably between 0.004 and 1 μm, in particular between 0.005 and 0.1 μm, more in particular between 0.01 and 0.03 μm.

The primary coating of the present invention has an equilibrium modulus of about 1.5 MPa or less. The equilibrium modulus according to the present invention is measured by DMTA in tension according to ASTM D5026-95a, wherein the equilibrium modulus is determined as described in the experimental section. The use of such a low equilibrium modulus primary coating results in a glass fiber that is less sensitive towards attenuation loss. This reduced sensitivity towards attenuation loss is in particular relevant in so called "non-zero dispersion shifted single mode optical fibers", and in multimode fibers as these fibers are sensitive to attenuation due to so-called microbending. Preferably, the equilibrium modulus is 1.3 MPa or less, 1.2 MPa or less, 1.0 MPa or less, 0.9 MPa or less, 0.8 MPa or less, 0.7 MPa or less or 0.6 MPa or less. In general, the equilibrium modulus will be 0.05 MPa or higher, preferably about 0.1 MPa or

higher, more preferably 0.2 MPa or higher, and most preferred, 0.3 MPa or higher.

The cavitation strength should be sufficiently high for low equilibrium modulus products. The present invention provides primary coating compositions, which when cured result in primary coatings fulfilling the above requirements.

The cavitation strength is measured according to the method described in the experimental section and is the triaxial stress at which a defined number of cavities become visible at about 20x magnification. For the purpose of the present invention the stress is measured at which a second, fourth, or tenth cavity becomes visible at about 20x magnification at a pulling speed of 20 μm/min in a 100 μm thick sample (or 20% $min^{-1}$).

The present invention relates to a primary coating composition when cured having an equilibrium modulus of about 1.5 MPa or less, and a cavitation strength at which a tenth cavity appears ($\sigma^{10}_{cav}$) of at least about 1.1 MPa. Preferably the $\sigma^{10}_{cav}$ is about 1.2 MPa or more, more preferably about 1.3 MPa or more, and most preferably about 1.5 MPa or more.

The present invention further relates to a coated optical fiber comprising a glass optical fiber, a primary coating applied thereon, a secondary coating and optionally an ink composition subsequently applied thereon, wherein the primary coating is obtained by curing the radiation-curable primary coating composition according to the invention.

With the radiation-curable primary coating compositions of the present invention it is possible to make coatings which have a very low equilibrium modulus and yet have a high level of integrity with respect to cavitation strength.

Furthermore, this invention allows for the design of coating systems in which the secondary coating when cured has a high Tg and/or high storage modulus at 23°C. High modulus secondary coatings are desirable for certain cable designs.

The primary coating has a (very) low equilibrium modulus, i.e. about 1.5 MPa or less, and a Tg of less than about 0°C, preferably, less than about -5°C, more preferred, less than about -10°C, and most preferred, less than about -20°C. Herein the Tg is measured by the first peak tan-δ at 1 Hz in a DMTA curve when starting from the high temperature side. In general, the Tg of primary coatings is at least about -80°C, preferably at least about -60°C.

Generally, the Tg of the secondary, as measured by the peak tan-δ at 1 Hz in DMTA, is about 40°C or higher. Preferably, the Tg is about 50°C or higher, and more preferable about 60°C or higher. Generally, the Tg will be about 100°C or lower. Herein the Tg is measured by the first peak tan-δ at 1 Hz in a DMTA curve when starting from the high temperature side. The storage modulus E' at 23°C preferably is about 200 MPa or higher, more preferably between 400-3000 MPa.

In one embodiment of the invention the radiation-curable primary coating composition is based on (meth) acrylate functional oligomers and radiation-curable monomers with photo-initiator(s) and additives. Examples of additives include a stabiliser and a coupling agent, preferably a silane coupling agent. The adhesion to the glass of the primary coating, when cured, as measured according to adhesion test described in WO 99/15473, which is incorporated herein by reference, generally is at least about 5 g in force at 50% RH and at 95% RH (Relative Humidity). Preferably, the adhesion is at least about 10 g in force, more preferably at least about 20 g in force, particularly preferred at least about 50g in force and most preferred at least about 80 g in force, both at 50% RH and 95% RH. The adhesion may be as high as 250 g in force.

The radiation-curable primary coating compositions of the present invention generally comprise, in addition to the particles,

(A) 20-98 wt% of at least one oligomer having a molecular weight of about 1000 or higher, preferably, 20-80 wt%, more preferably, 30-70 wt%,
(B) 0-80 wt% of one or more reactive diluents, preferably, 5-70 wt%, more preferably, 10-60 wt%, most preferably, 15-60 wt%,
(C) 0.1-20 wt% of one or more photo-initiators for initiation of a radical polymerisation reaction, preferably, 0.5-15 wt%, more preferably, 1-10 wt%, most preferably, 2-8 wt%,
(D) 0-5 wt% of additives.

Preferably, the oligomer (A) is a urethane (meth)acrylate oligomer, comprising a (meth)acrylate group, urethane groups and a backbone. (Meth)acrylate includes acrylate as well as methacrylate functionality. The backbone is derived from a polyol which has been reacted with a polyisocyanate and a hydroxyl group containing (meth)acrylate. However, urethane-free ethylenically unsaturated oligomers may also be used.

Examples of suitable polyols are polyether polyols, for example polypropylene glycol, polyester polyols, polycarbonate polyols, polycaprolactone polyols, acrylic polyols, hydrocarbon polyols, acrylonitrile butadiene rubber (NBR), polyols and the like. These polyols may be used either individually or in combinations of two or more. There are no specific limitations to the manner of polymerization of the structural units in these polyols. Any of random polymerization, block polymerization, or graft polymerization is acceptable. Examples of suitable polyols, polyisocyanates and hydroxylgroup-containing (meth)acrylates are disclosed in WO 00/18696, which is incorporated herein by reference.

The number average molecular weight derived from the hydroxyl number of these polyols is usually from about

50 to about 25,000 g/mol, preferably from about 500 to about 15,000 g/mol, more preferably from about 1,000 to about 8,000 g/mol, and most preferred, from about 1,500 to 6,000 g/mol.

The ratio of polyol, di- or polyisocyanate (as disclosed in WO 00/18696), and hydroxyl group-containing (meth) acrylate used for preparing the urethane (meth)acrylate is determined so that about 1.1 to about 3 equivalents of an isocyanate group included in the polyisocyanate and about 0.1 to about 1.5 equivalents of a hydroxyl group included in the hydroxyl group-containing (meth)acrylate are used for one equivalent of the hydroxyl group included in the polyol.

In the reaction of these three components, an urethanization catalyst such as copper naphthenate, cobalt naphthenate, zinc naphthenate, di-n-butyl tin dilaurate, triethylamine, and triethylenediamine, 2-methyltriethyleneamine, is usually used in an amount from about 0.01 to about 1 wt% of the total amount of the reactant. The reaction is carried out at a temperature from about 10 to about 90°C, and preferably from about 30 to about 80°C.

The number average molecular weight of the urethane (meth)acrylate used in the composition of the present invention is preferably in the range from about 1,200 to about 20,000 g/mol, and more preferably from about 2,200 to about 10,000 g/mol. If the number average molecular weight of the urethane (meth)acrylate is less than about 1000 g/mol, the resin composition tends to vitrify at room temperature; on the other hand, if the number average molecular weight is larger than about 20,000 g/mol, the viscosity of the composition becomes high, making handling of the composition difficult.

The urethane (meth)acrylate is preferably present in an amount from about 20 to about 80 wt%, of the total amount of the resin composition. When the composition is used as a coating material for optical fibers, the range from about 20 to about 80 wt% is particularly preferable to ensure excellent coatability, as well as superior flexibility and long-term reliability of the cured coating.

Preferred oligomers are polyether based acrylate oligomers, polycarbonate acrylate oligomers, polyester acrylate oligomers, alkyd acrylate oligomers and acrylated acrylic oligomers. More preferred are the urethane-containing oligomers thereof. Even more preferred are polyether urethane acrylate oligomers and urethane acrylate oligomers using blends of the above polyols, and particularly preferred are aliphatic polyether urethane acrylate oligomers. The term "aliphatic" refers to a wholly aliphatic polyisocyanate used. However, also urethane-free acrylate oligomers, such as urethane-free acrylated acrylic oligomers, urethane-free polyester acrylate oligomers and urethane-free alkyd acrylate oligomers are preferred.

Suitable reactive diluents (B) are polymerizable monofunctional vinyl monomers and polymerizable polyfunctional vinyl monomers, as disclosed in WO 97/42130, which is incorporated herein by reference.

Said polymerizable vinyl monomers are preferably used in an amount from about 10 to about 70 wt%, and more preferred from about 15 to about 60 wt%, of the total amount of the resin composition. Preferred reactive diluents are alkoxylated alkyl substituted phenol acrylate, such as ethoxylated nonyl phenol acrylate and propoxylated nonyl phenol acrylate, vinyl monomers such as vinyl caprolactam, isodecyl acrylate, lauryl acrylate, ethyl hexyl acrylate, diethylene glycol ethyl hexyl acrylate, alkoxylated bisphenol A diacrylate such as ethoxylated bisphenol A diacrylate, hexane diol diacrylate (HDDA), tripropylene glycol diacrylate, tetramethylene glycol triacrylate (TMGTA), tetramethylene glycol diacrylate (TMGDA), neopentylglycol diacylate (NPGDA) and dipropylene glycol diacrylate (DPGDA).

Preferably, the photo-initiators (C) are free radical photo-initiators. Free-radical photo-initiators are generally divided into two classes according to the process by which the initiating radicals are formed. Compounds that undergo unimolecular bond cleavage upon irradiation are termed Type I or homolytic photo-initiators. If the excited state photo-initiator interacts with a second molecule (a coinitiator) to generate radicals in a bimolecular reaction, the initiating system is termed a Type 11 photo-initiator. In general, the two main reaction pathways for Type II photo-initiators are hydrogen abstraction by the excited initiator or photoinduced electron transfer, followed by fragmentation.

Examples of suitable free-radical photo-initiators are disclosed in WO 00/18696 and are incorporated herein by reference.

Preferably, the total amount of photo-initiators present is between about 0.10 wt% and about 20.0 wt% relative to the total amount of the coating composition. More preferably, the total amount is at least about 0.5 wt%, particularly preferred, at least about 1.0 wt%, and most preferred, at least about 2.0 wt%. Moreover, the total amount is preferably less than about 15.0 wt%, more preferably, less than about 10.0 wt%, and particularly preferred, less than about 6.0 wt%

In one preferred embodiment of the present invention at least one of the photo-initiators contains a phosphorous, sulfur or nitrogen atom. It is even more preferred that the photo-initiator package comprises at least a combination of a photo-initiator containing a phosphorous atom and a photo-initiator containing a sulfur atom.

In another preferred embodiment of the invention, at least one of the compounds (C) is an oligomeric or polymeric photo-initiator.

As an additive (D), an amine compound can be added to the liquid curable resin composition of the present invention to prevent generation of hydrogen gas, which causes transmission loss in the optical fibers. As examples of the amine which can be used here, diallylamine, diisopropylamine, diethylamine, diethylhexylamine, and the like can be given.

In addition to the above-described components, various additives such as antioxidants, UV absorbers, light

stabilizers, silane coupling agents, coating surface improvers, heat polymerization inhibitors, leveling agents, surfactants, colorants, preservatives, plasticizers, lubricants, solvents, fillers, aging preventives, and wettability improvers can be used in the liquid curable resin composition of the present invention, as required. If a colorant is used in a primary coating, preferably a die is used instead of a pigment. More preferably no colorant is used.

Radiation curable primary coating compositions are described in for example: EP-A-0565798, EP-A2-0566801, EP-A-0895606, EP-A-0835606 and EP-A-0894277. In particular low equilibrium modulus coatings are described in WO99/08975, in WO99/52958, in WO91/03499, and in EP-B1-566801. The content of these references is incorporated herein, as these references provide the man skilled in the art sufficient information to make low equilibrium modulus coatings.

The zero shear viscosity at 23°C of the liquid curable resin composition of the present invention is usually in the range from about 0.2 to about 200 Pa.s, and preferably from about 2 to about 15 Pa.s.

The elongation-at-break of the primary coatings of the present invention is typically greater than about 50%, preferably greater than about 60%, more preferably the elongation-at-break is at least about 100%, more preferably at least about 150% but typically not higher than about 400%. This elongation-at-break can be measured at a speed of 5 mm/min, 50 mm/min or 500 mm/min respectively, preferably at 50 mm/min.

According to one preferred embodiment of the present invention, the primary coatings having an equilibrium modulus E of about 1.5 MPa or less have a volumetric expansion coefficient $\alpha_{23}$ of about 6.85 x $10^{-4}$ $K^{-1}$ or less, preferably about 6.70 x $10^{-4}$ $K^{-1}$ or less, more preferred about 6.60 x $10^{-4}$ $K^{-1}$ or less, even more preferred about 6.50 x $10^{-4}$ $K^{-1}$ or less, and most preferred about 6.30 x $10^{-4}$ $K^{-1}$ or less.

The present invention also relates to coating system for an optical glass fiber comprising a radiation-curable primary coating composition according to the invention and a radiation-curable secondary coating composition.

In general, the particles in the radiation-curable primary coating composition are chosen such that the primary coating obtained by curing the primary coating composition is colorless and transparant.

In general, optical fibers are coated first with a primary coating and subsequently with a secondary coating. The coatings can be applied as a wet-on-wet system (without first curing of the primary) or as a wet-on-dry system. The primary coating can be colored with a die, or secondary coatings can be colored with pigments or dies, or a clear secondary can be further coated with an ink. The primary and secondary coatings generally have a thickness of about 30 μm each. An ink coating generally has a thickness of about 5 μm (3-10 μm).

The coated and preferably colored optical fibers can be used in a ribbon comprising a plurality of said optical fibers, generally in a parallel arrangement. The plurality of optical fibers is further coated with one or more matrix materials in order to obtain a ribbon. The present invention therefore further relates to a ribbon comprising a plurality of coated and preferably colored optical fibers, generally in a parallel arrangement, said coated optical fiber comprising at least a primary coating according to the present invention and preferably a secondary coating according to the present invention.

The invention will be further elucidated by the following examples and test methods.

Description of test methods

A. Measurement of cavitation strength

Measurement set up

The measurement set up is described in WO02/42237 which is incorporated herein as a reference.

The measurement set up consists of a digital tensile testing machine ZWICK 1484 with digital control and with a video camera fitted on the top (moving) plate of the machine. The sample is held in place by a fixture connected to the load cell. The growth of the cavities can then be followed in real time.

In order to obtain reproducible values of the cavitation strength, two major points should be kept in mind concerning the measurement set up itself. First, the parallellity of the set up is very important to allow a correct translation between the force at which cavitation starts and the actual stress level in the cured coating. In the case of a good parallellity of the plates, the stress distribution over the film will be nearly flat, the coating layer is then (approximately) subjected to a homogeneous triaxial stress level σ, equal to the ratio (force/sample area).

If the alignment of the set up is imperfect, however, the sample may experience a torque resulting in an inhomogeneous tearing of the polymer film. In this case, the inhomogeneous stress distribution makes it difficult to translate the registered force signal into the actual stress in the film.

The parallelity can be finely adjusted using three micrometer screws on the moving plate of the tensile testing machine. Circular glass plates (40 mm in diameter, at least 5 mm in thickness) were used and by using three hardened steel balls fitted to the adjustable plate one can - within the accuracy of the micrometer screws, about 1 μm - adjust the parallelity of the sample in the measurement set up.

Another important factor is the stiffness of the entire set up: the compliance of the measurement set up should

be as low as possible to avoid any storage of elastic energy in the measurement set up. The adjustable plate was therefore made of 15 mm thick steel resulting in a compliance of approximately 0,2 μm/N for the total set up. The compliance is measured by using a welded steel sample having the same geometry and is determined from the measured force and displacement.

Sample preparation

The glass plates (boro silicatum glass) and quartz billets were finely polished using carborundum powder to such an extent that the roughness (Ra) of the glass plates has a value of 1.17 ± 0.18 μm and the roughness (Ra) of the quartz billets has a value of 1.18 ± 0.04 μm. Subsequently, the glass and quartz pieces were burned clean in an oven at 600°C for one hour and the surfaces were rinsed with acetone and allowed to dry. The clean surfaces were kept in a closed container to avoid dust settling.

The surfaces were treated with a silane solution as follows:

Preparation of silane solution

A 95% ethanol - 5% water solution was adjusted to pH 4.5 - 5.5 with acetic acid, and a silane (Methacryloxypropyltrimethoxysilane, A174 from Witco) was added to yield a 5% silane solution (ca. 74.39%wt ethanol / 3.84%wt water / 16.44%wt acetic acid / 5.32%wt silane). The silane solution was left for five minutes at room temperature to allow hydrolysis and silanol formation.

The fresh silane solution was applied to the glass or quartz surfaces by using pipette. The silane layer was cured by placing the treated glass or quartz plates in an oven at 90°C for five to ten minutes. The treated glass or quartz plates were rinsed free of excess materials by gently dipping in ethanol.

The example was assembled as follows:

A quartz cup was attached to the top plate of the two-plate micrometer using a vacuum system (vacuum pump).

The micrometer was zeroed using both the quartz billet and the glass plate. A droplet of resin was gently placed in the middle of the glass plate.

The glass plate was placed on the lower plate of the two-plate micrometer and the film thickness was adjusted by slowly pushing the quartz billet onto the resin droplet. Subsequently, the sample was cured with a 1 J/cm$^2$ UV-dose of Fusion F600W UV-lamp system having as lamps 1600M radiator (600 W/inch which equals 240 W/cm, and thus, in total 6000 W) fitted with R500 reflector, one with a H bulb and one with a D bulb UV lamp, of which the D-bulb was used to cure the samples.

The samples were stored in a dark place, so that no post-cure by UV-light can take place.

Cured samples were measured within 1-2 hours after preparation.

Measurement

The sample was placed in the tensile testing apparatus from ZWICK type 1484.

When an experiment was started, a video camera recorded the behavior of the film while showing the stress exerted on the film. Unless otherwise stated, the pulling speed was 20 μm/min. The microscope was used to achieve about 20x magnification (the 9.5 mm sample was enlarged to 19 cm at the video screen). From the videotape, the appearing of a number of cavities at a certain measured stress was noted.

B. Measurement of Equilibrium modulus, Storage modulus at 23°C (E'23) and Glass transition temperature in DMTA

Sample Preparation

The samples were cured with a 1 J/cm$^2$ UV-dose of a Fusion F600W UV-lamp system (measured with AN international Light 390-bug) as described under paragraph A above using a D bulb at a belt speed of 20.1 m/min.

Measurement

The equilibrium modulus of the primary coatings of the present invention is measured by Dynamic mechanical Analysis (DMTA) in tension according to the standard Norm ASTM D5026-95a "Standard Test Method for Measuring the Dynamic Mechanical Properties of Plastics in Tension" under the following conditions which are adapted for the coatings of the present invention.

A temperature sweep measurement is carried out under the following test conditions:

| | | |
|---|---|---|
| Test pieces: | Rectangular strips | |
| Length between grips: | 18-22mm | |
| Width: | 4mm | |
| Thickness: | 90 μ | |
| Equipment: | Tests were performed on a DMTA machine from Rheometric Scientific type RSA3 (Rheometrics Solids Analyser III) | |
| Frequency: | 1Hz | |
| Initial strain: | 0.15 % | |
| Temperature range: | starting from -130°C heating until 250°C | |
| Ramp speed: | 5°C/min | |
| Autotension: | Static Force Tracking Dynamic Force | |
| | Initial static Force: | 0.9N |
| | Static>Dynamic Force % | 10 |
| Autostrain: | | |
| | Max. Applied Strain: | 2% |
| | Min. Allowed Force: | 0.05N |
| | Max. Allowed Force: | 1.4N |
| | Strain adjustment: | 10% (of current strain) |
| Dimensions test piece: | *Thickness:* measured with an electronic Heidenhain thickness measuring device type MT 30B with a resolution of 1μm.<br>*Width:* measured with a MITUTOYO microscope with a resolution of 1μm. | |

All the equipment is calibrated in accordance with ISO 9001.

In a DMTA measurement, which is a dynamic measurement, the following moduli are measured: the storage modulus E', the loss modulus E", and the dynamic modulus E* according to the following relation $E^*=(E'^2 + E''^2)^{1/2}$. The loss tangent $\tan\delta = E''/E'$ is used for the determination of the Tg.

The lowest value of the storage modulus E' in the DMTA curve in the temperature range between 10 and 100 °C measured at a frequency of 1 Hz under the conditions as described in detail above is taken as the equilibrium modulus of the coating. The storage modulus E' at 23°C in the DMTA curve is taken as E'23.

Examples

Synthesis of Oligomer A

A one liter round bottom four-neck flask is equipped with mechanical agitator, thermometer, reflux condenser, addition funnel and inlet line for dry air. Into the flask is weighed 49.36 grams of 2,4-toluene diisocyanate (Mondur® TDS) and 0.25 grams of 2,6-di-tert-butyl-4-methyl phenol (BHT). The mixture is stirred at room temperature under an atmosphere of dry air until the solid is completely dissolved. To the resulting solution is added 16.45 grams of 2-hydroxyethyl acrylate (2-HEA) at a rate to complete addition in 45-60 minutes. During addition, the temperature is allowed to increase to 60°C. When addition is complete, the temperature is held at 60°C for one hour followed by addition of 0.25 grams of dibutyltin dilaurate. Following addition of dibutin dilaurate, the temperature is held at 60°C for an addition 30 minutes, at which point a sample is taken for determination of remaining isocyanate content by titration with dibutylamine reagent to a bromophenol blue endpoint. When the value of remaining isocyanate content reaches the theoretical value, the remainder of addition can begin. To the resulting solution is added 433.68 grams of hydroxyl-terminated poly(propylene glycol) (Pluracol® P201 0). Addition is made to occur from an addition funnel over 15-30 minutes or alternatively can be made all at once from a suitable container. After addition is complete, the mixture is heated to 85°C and this temperature is maintained until a value of less than 0.2% isocyanate is recorded. The resulting oligomer is then poured into a suitable container.

Formulations Examples 1-3 and Comparative experiment A

| Example | Oligomer A (wt%) | Diluent: ENPA (wt%) | Nanocryl XP 21/1306 (vol%*) | Solvent: BUEA (wt%) | I184 |
|---|---|---|---|---|---|
| 1 | 49 | 47 | 1.1 | 2 | 3 |
| 2 | 48 | 44 | 2.2 | 4 | 3 |
| 3 | 47 | 41 | 3.3 | 6 | 3 |
| Comp. Exp. | | | | | |
| A | 50 | 47 | 0 | 0 | 3 |

ENPA: Ethoxylated nonyl phenyl acrylate SR504 from Sartomer
Nanocryl XP 21/1306: Silica obtained from Hanse Chemie; approximately 20 nm $SiO_2$ particles in BUEA (CL1039) (50/50 w/w); η = 250 mPa.s.
BUEA: Butyl urethane ethyl acrylate CL1039 from UCB/Cytec Chemicals
I184: Irgacure 184 from Ciba Specialty Chemicals
*The vol% of silica particles was calculated from the wt% and the density of the silica particles. The density of the silica particles was calculated by measuring the density of Nanocryl XP 21/1306 (containing 50 wt% of silica) by weighing 10 $cm^2$ of this material and measuring the density of BUEA:
Density Nanocryl XP 21/1306: 1.37 g/ml
Density BUEA: 1.05 g/ml
Density silica particles:1.97 g/ml.

Equilibrium modulus and cavitation strength Examples 1-3 and Comparative experiment A

| Example | Equilibrium modulus (MPa.) | Cavitation strength (MPa) |
|---|---|---|
| 1 | 0.61 | 1.1 |
| 2 | 0.66 | 1.3 |
| 3 | 0.69 | 1.9 |
| Comparative experiment | | |
| A | 0.52 | 1.0 |

The results show that the presence of Nanocryl XP 21/1306 particles in the primary coating strongly increase the cavitation strength at the expense of only a limited increase in equilibrium modulus.

## Claims

1. Radiation-curable primary coating composition comprising 0.6-10 vol% of particles, which when cured has an equilibrium modulus of 1.5 MPa or less, and a cavitation strength at which a tenth cavity appears ($\sigma^{10}{}_{cav}$) of at least 1.1 MPa.

2. Radiation-curable primary coating composition according to claim 1, wherein the particles have a flakiness ratio m = B/T of 10 or less, wherein the thickness T is the minimum distance between two parallel planes which are tangential to opposite surfaces of the particle, one plane being the plane of maximum stability, and the breath B is the minimum distance between two parallel planes which are perpendicular to the planes defining the thickness T and are tangential to opposite sides of the particles, and wherein the particles have a length L of between 0.003 and 3 μm, wherein L is the distance between two parallel planes which are perpendicular to the planes defining thickness T and breath B and are tangential to opposite sides of the particles.

3. Radiation-curable primary coating composition according to any one of claims 1-2, wherein the particles are one or more types of inorganic particles.

**4.** Radiation-curable primary coating composition according to claim 3, wherein the particles are have reactive organic groups on their surface.

**5.** Radiation-curable primary coating composition according to any one of claims 1-2, wherein the particles are one or more types of organic particles.

**6.** Radiation-curable primary coating composition according to any one of claims 1-5, wherein the particles are chosen such that the primary coating obtained by curing the primary coating composition is colorless and transparant.

**7.** Radiation-curable primary coating composition according to any one of claims 1-6, further comprising

(A) 20-98 wt% of at least one oligomer having a molecular weight of about 1000 or higher,
(B) 0-80 wt% of one or more reactive diluents,
(C) 0.1-20 wt% of one or more photo-initiators for initiation of a radical polymerisation reaction,
(D) 0-5 wt% of additives,

wherein the total amount of particles and (A) -(D) adds up to 100 wt%.

**8.** Radiation-curable primary coating composition according to any one of claims 1-7 wherein the $\sigma^{10}_{cav}$ is at least 1.1 MPa.

**9.** Radiation-curable primary coating composition according to any one of claims 1-8 wherein the equilibrium modulus is 1.2 MPa or less.

**10.** Coating system for an optical glass fiber comprising a radiation-curable primary coating composition according to any one of claims 1-9 and a radiation-curable secondary coating composition.

**11.** Coated optical fiber comprising an optical glass fiber, a primary coating obtained by curing a primary coating composition according to any one of claims 1-9 applied thereon, a secondary coating applied on the primary coating and optionally an ink composition applied on the secondary coating.

**12.** Optical fiber ribbon comprising a plurality of coated, and optionally colored optical fibers arranged in a plane and embedded in a matrix composition, wherein at least one coated optical fiber is a coated optical fiber according to claim 11.

**13.** Use of a radiation-curable primary coating composition according to any one of claims 1-9 for coating an optical glass fiber.

## Patentansprüche

**1.** Strahlungshärtbare Primärbeschichtungszusammensetzung, die 0,6 bis 10 Vol.-% Teilchen umfasst und die im gehärteten Zustand einen Gleichgewichtsmodul von 1,5 MPa oder weniger und eine Kavitationsfestigkeit, bei der eine zehnte Kavität auftritt ($\sigma^{10}_{cav}$), von wenigstens 1,1 MPa aufweist.

**2.** Strahlungshärtbare Primärbeschichtungszusammensetzung gemäß Anspruch 1, wobei die Teilchen ein Flockigkeitsverhältnis m = B/T von 10 oder weniger haben, wobei die Dicke T der minimale Abstand zwischen zwei parallelen Ebenen ist, die tangential an gegenüberliegenden Flächen des Teilchens anliegen, wobei die eine Ebene die Ebene der maximalen Stabilität ist, und die Breite B der minimale Abstand zwischen zwei parallelen Ebenen ist, die senkrecht zu den die Dicke T definierenden Ebenen stehen und tangential an gegenüberliegenden Seiten der Teilchen anliegen, und wobei die Teilchen eine Länge L zwischen 0,003 und 3 $\mu$m haben, wobei L der Abstand zwischen zwei parallelen Ebenen ist, die senkrecht zu den die Dicke T und die Breite B definierenden Ebenen stehen und tangential an gegenüberliegenden Seiten der Teilchen anliegen.

**3.** Strahlungshärtbare Primärbeschichtungszusammensetzung gemäß einem der Ansprüche 1 bis 2, wobei es sich bei den Teilchen um einen oder mehrere Typen anorganischer Teilchen handelt.

**4.** Strahlungshärtbare Primärbeschichtungszusammensetzung gemäß Anspruch 3, wobei die Teilchen reaktive organische Gruppen auf ihrer Oberfläche aufweisen.

**5.** Strahlungshärtbare Primärbeschichtungszusammensetzung gemäß einem der Ansprüche 1 bis 2, wobei es sich bei den Teilchen um einen oder mehrere Typen organischer Teilchen handelt.

**6.** Strahlungshärtbare Primärbeschichtungszusammensetzung gemäß einem der Ansprüche 1 bis 5, wobei die Teilchen so gewählt sind, dass die durch Härten der Primärbeschichtungszusammensetzung erhaltene Primärbeschichtung farblos und transparent ist.

**7.** Strahlungshärtbare Primärbeschichtungszusammensetzung gemäß einem der Ansprüche 1 bis 6, die weiterhin Folgendes umfasst:

(A) 20 bis 98 Gew.-% wenigstens eines Oligomers mit einem Molekulargewicht von etwa 1000 oder höher;
(B) 0 bis 80 Gew.-% eines oder mehrerer reaktiver Verdünnungsmittel;
(C) 0,1 bis 20 Gew.-% eines oder mehrerer Photoinitiatoren zur Einleitung einer radikalischen Polymerisationsreaktion;
(D) 0 bis 5 Gew.-% Additive;

wobei die Gesamtmenge der Teilchen und von (A) bis (D) zusammen 100 Gew.-% ergibt.

**8.** Strahlungshärtbare Primärbeschichtungszusammensetzung gemäß einem der Ansprüche 1 bis 7, wobei das $\sigma^{10}{}_{cav}$ wenigstens 1,1 MPa beträgt.

**9.** Strahlungshärtbare Primärbeschichtungszusammensetzung gemäß einem der Ansprüche 1 bis 8, wobei der Gleichgewichtsmodul 1,2 MPa oder weniger beträgt.

**10.** Beschichtungssystem für eine optische Glasfaser, das eine strahlungshärtbare Primärbeschichtungszusammensetzung gemäß einem der Ansprüche 1 bis 9 und eine strahlungshärtbare Sekundärbeschichtungszusammensetzung umfasst.

**11.** Beschichtete Glasfaser, umfassend eine optische Glasfaser, eine Primärbeschichtung, die durch Härten einer darauf aufgetragenen Primärbeschichtungszusammensetzung gemäß einem der Ansprüche 1 bis 9 erhalten ist, eine Sekundärbeschichtung, die auf der Primärbeschichtung aufgetragen ist, und gegebenenfalls eine Tintenzusammensetzung, die auf der Sekundärbeschichtung aufgetragen ist.

**12.** Glasfaserband, das eine Vielzahl von beschichteten und gegebenenfalls farbigen Glasfasern umfasst, die in einer Ebene angeordnet und in eine Matrixzusammensetzung eingebettet sind, wobei wenigstens eine beschichtete Glasfaser eine beschichtete Glasfaser gemäß Anspruch 11 ist.

**13.** Verwendung einer strahlungshärtbaren Primärbeschichtungszusammensetzung gemäß einem der Ansprüche 1 bis 9 zur Beschichtung einer optischen Glasfaser.

## Revendications

**1.** Composition de revêtement primaire durcissable par rayonnement comprenant 0,6-10 % en volume de particules, qui, quand elle est durcie, a un module à l'équilibre de 1,5 MPa ou moins et une résistance à la cavitation à laquelle une dixième cavité apparaît ($\sigma^{10}{}_{cav}$) d'au moins 1,1 MPa.

**2.** Composition de revêtement primaire durcissable par rayonnement selon la revendication 1 où les particules ont un rapport d'aplatissement m = B/T de 10 ou moins, où l'épaisseur T est la distance minimale entre deux plans parallèles qui sont tangentiels à des surfaces opposées de la particule, un plan étant le plan de stabilité maximale, et la largeur B est la distance minimale entre deux plans parallèles qui sont perpendiculaires aux plans définissant l'épaisseur T et sont tangentiels à des côtés opposés des particules, et où les particules ont une longueur L de 0,003 à 3 $\mu$m, où L est la distance entre deux plans parallèles qui sont perpendiculaires aux plans définissant l'épaisseur T et la largeur B et sont tangentiels à des côtés opposés des particules.

**3.** Composition de revêtement primaire durcissable par rayonnement selon l'une quelconque des revendications 1-2

où les particules sont un ou plusieurs types de particules inorganiques.

**4.** Composition de revêtement primaire durcissable par rayonnement selon la revendication 3 où les particules ont des groupes organiques réactifs sur leur surface.

**5.** Composition de revêtement primaire durcissable par rayonnement selon l'une quelconque des revendications 1-2 où les particules sont un ou plusieurs types de particules organiques.

**6.** Composition de revêtement primaire durcissable par rayonnement selon l'une quelconque des revendications 1-5 où les particules sont choisies de telle manière que le revêtement primaire obtenu par durcissement de la composition de revêtement primaire est incolore et transparent.

**7.** Composition de revêtement primaire durcissable par rayonnement selon l'une quelconque des revendications 1-6 comprenant en outre

(A) 20-98 % en masse d'au moins un oligomère ayant une masse moléculaire d'environ 1 000 ou plus,
(B) 0-80 % en masse d'un ou plusieurs diluants réactifs,
(C) 0,1-20 % en masse d'un ou plusieurs photoinitiateurs pour l'initiation d'une réaction de polymérisation radicalaire,
(D) 0-5 % en masse d'additifs,

où la quantité totale de particules et de (A) - (D) représente au total 100 % en masse.

**8.** Composition de revêtement primaire durcissable par rayonnement selon l'une quelconque des revendications 1-7 où la $\sigma^{10}_{cav}$ est d'au moins 1,1 MPa.

**9.** Composition de revêtement primaire durcissable par rayonnement selon l'une quelconque des revendications 1-8 où le module à l'équilibre est 1,2 MPa ou moins.

**10.** Système de revêtement pour une fibre de verre optique comprenant une composition de revêtement primaire durcissable par rayonnement selon l'une quelconque des revendications 1-9 et une composition de revêtement secondaire durcissable par rayonnement.

**11.** Fibre optique revêtue comprenant une fibre de verre optique, un revêtement primaire obtenu par durcissement d'une composition de revêtement primaire selon l'une quelconque des revendications 1-9 appliqué sur elle, un revêtement secondaire appliqué sur le revêtement primaire et éventuellement une composition d'encre appliquée sur le revêtement secondaire.

**12.** Ruban de fibres optiques comprenant une pluralité de fibres optiques revêtues et éventuellement colorées disposées dans un plan et incluses dans une composition de matrice où au moins une fibre optique revêtue est une fibre optique revêtue selon la revendication 11.

**13.** Utilisation d'une composition de revêtement primaire durcissable par rayonnement selon l'une quelconque des revendications 1-9 pour revêtir une fibre de verre optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9908975 A
- WO 0242237 A
- US 6025455 A
- WO 9915473 A
- WO 0018696 A
- WO 9742130 A
- EP 0565798 A
- EP 0566801 A2
- EP 0895606 A
- EP 0835606 A
- EP 0894277 A
- WO 9952958 A
- WO 9103499 A
- EP 566801 B1


### Non-patent literature cited in the description


- **BOUTEN et al.** *J. of Lightwave Technology,* April 1989, vol. 7, 680-686
- **KING ; ALOISIO.** Thermomechnical Mechanism for Delamination of Polymer Coatings from Optical Fibers. *J. Electronic Packaging,* June 1997, vol. 119, 133-137
- **HEYWOOD, H.** *J. Pharm. Pharmacol.,* 1963, vol. 15, 56T
- **T. ALLEN.** Particle Size Measurement. Chapman and Hall Ltd, 1975